# EUROPÄISCHE PATENTANMELDUNG

(11) **EP 1 643 167 A1**
(43) Veröffentlichungstag der Anmeldung: **05.04.2006**
(21) Anmeldenummer: 05020748.9
(22) Anmeldetag: 22.09.2005
(51) Int. Cl.: F16H 61/662, F16H 63/06

(54) **Stufenlos einstellbares Keilriemenscheibengetriebe**

(30) Priorität: 22.09.2004 DE 102004046234; 21.12.2004 DE 102004062715
(71) Anmelder: Wieneke, Svein, 41061 Mönchengladbach (DE)
(72) Erfinder: Wieneke, Svein, 41061 Mönchengladbach (DE)

(57) **Zusammenfassung**

Diese Anordnungen zeigt den Aufbau einer leichtgängigen, leichten, preiswerten, komfortablen, preiswerten und wartungsarmen Schaltung auf

## Beschreibung

### Folgende Problematik:

Diese neue Keilriemenschaltung ist vorrangig für Fahrräder gedacht. Es werden Fahrräder mit immer mehr Gängen produziert. Dieses hat bei der momentan verwendeten Technik die Folge, dass die Schaltungen mit Ketten und Zahnrädern immer komplizierter und schwerer werden. Eigentlich sollten Fahrräder leicht und unkompliziert sein.

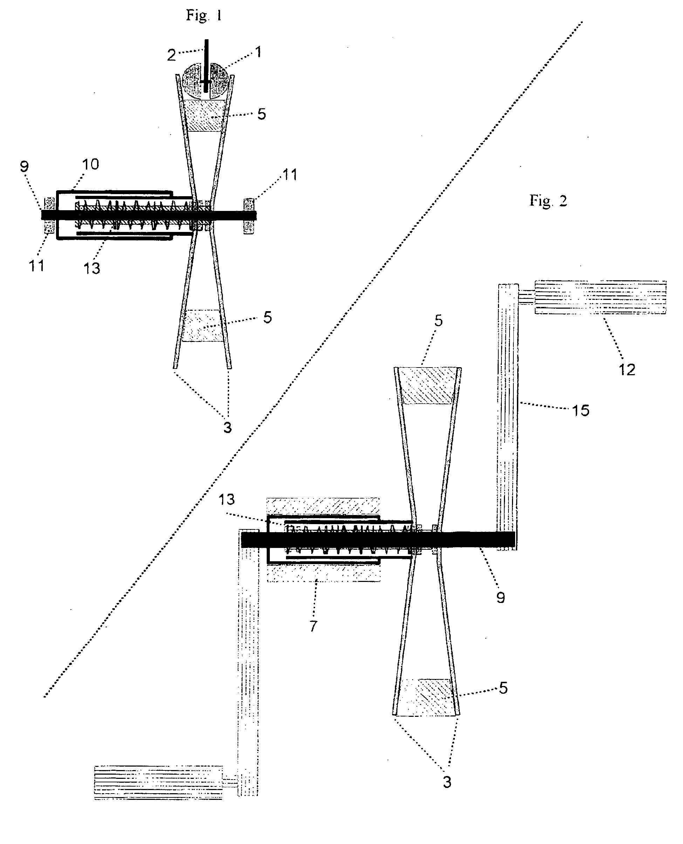

Diese Probleme werden durch eine einfache Keilriemenschaltung gelöst. Das unter (1) zu sehende Rad wird mit dem Hebel (2) entgegen der Drehrichtung in die Keilriemenscheibe (3) gedrückt. Durch die Tatsache, dass sich das Rad (1) quasi in die Keilriemenscheibe (3) hineinfrisst ist eine leichtgängige Veränderung der Breite möglich, diese Manipulation bewirkt, dass der wirksame Durchmesser und damit die Übersetzung verändert wird. Dadurch, dass die Keilriemenscheibe (Fig. 1 Nr. 3) nun einen geringeren Durchmesser hat ist weniger Spannung auf dem Keilriemen, dies hat zur Folge, dass sich die Keilriemenscheibe (Fig. 2 Nr.3) zusammen zieht und damit einerseits die nötige Spannung aufrecht erhält und andererseits das Übersetzungsverhältnis verändert.

Die Druckfeder (13) bewirkt, dass die geteilte Keilriemenscheibe (3) zusammengedrückt wird.

Die treibende Keilriemenscheibe ist auch geteilt und wird mit Federn zusammengedrückt, dadurch wird die nötige Spannung des Keilriemens gewährleistet und auch noch das Übersetzungsverhältnis beeinflusst. Zudem sind die beiden Keilriemenscheiben hydraulisch verbunden, damit vermieden wird. dass die Krafteinwirkung auf die treibende Keilriemenscheibe bewirkt, das selbige ihre Breite und damit den wirksamen Durchmesser ungewollt verändert.
Fig. 1: Querschnitt Hinterrad
Fig. 2: Treibende Keilriemenscheibe mit Pedalen

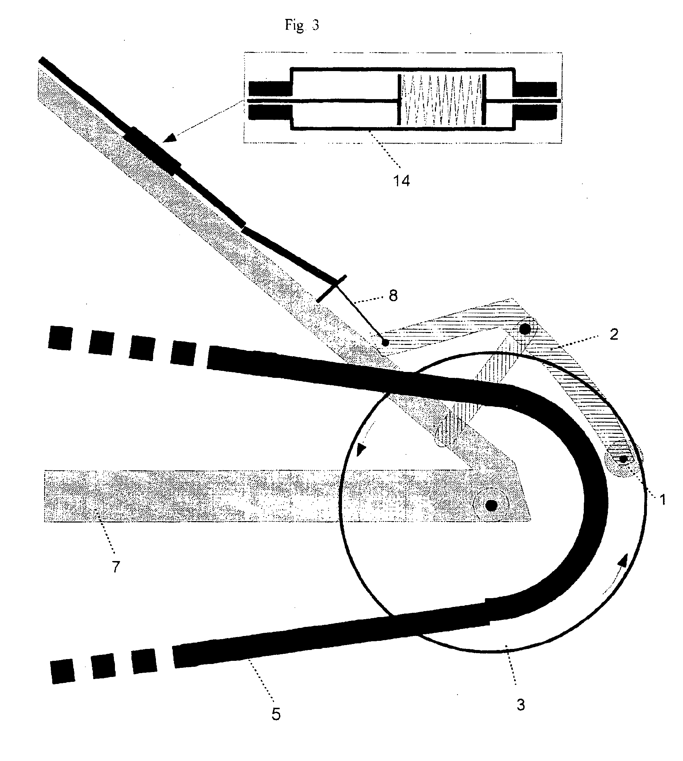

Fig. 3: Seitenansicht Hinterrad
Fig. 4: Ausführung ohne Feder

- 1: Rad
- 2: Hebel
- 3: geteilte Keilriemenscheibe
- 5: Keilriemen
- 7: Fahrradrahmen
- 8: Drahtzug
- 9: Achse
- 10: Radnabe
- 11: Schraube (Mutter)
- 12: Pedale
- 13: Feder
- 14: Drahtzugdruck- und Zugspeicher
- 15: Kurbel

## Patentansprüche

1. Stufenlos einstellbares Keilriemenscheibengetriebe, insbesondere für kleine Leistungen, deren Keuelscheibenpaare, die je nach Zweck der Übersetzung axial verschiebbare Kegelscheiben aufweisen, **dadurch gekennzeichnet, dass** mindestens ein Rad o. dgl. so angeordnet ist, dass diese (s) zwischen den Kegelscheiben entgegen deren Drehrichtung eingebracht werden.

2. Stufenlos einstellbares Keilriemenscheibengetriebe nach Anspruch 1, **dadurch gekennzeichnet, dass** die treibende und die getriebene Keilriemenscheibe(n) derart verbunden sind, so dass bei jeweiliger Veränderung des wirksamen Durchmessers der einen Scheibe sich die andere Scheibe dementsprechend anpasst D.h., wenn die eine geteilte Keilriemenscheibe breiter wird, wird die andere schmaler und umgekehrt.
